(19) Europäisches Patentamt
European Patent Office
Office européen des brevets

(11) **EP 4 610 889 A1**

(12) **EUROPEAN PATENT APPLICATION**

(43) Date of publication:
**03.09.2025 Bulletin 2025/36**

(21) Application number: **24198896.3**

(22) Date of filing: **06.09.2024**

(51) International Patent Classification (IPC):
**G06N 3/091** (2023.01)

(52) Cooperative Patent Classification (CPC):
**G06N 3/091**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2024 EP 24160773**

(71) Applicants:
- **Continental Automotive Technologies GmbH 30175 Hannover (DE)**
- **AUMOVIO Autonomous Mobility Germany GmbH 85057 Ingolstadt (DE)**

(72) Inventors:
- **Kassem Sbeyti, Moussa 30175 Hannover (DE)**
- **Dr. Karg, Michelle 88131 Lindau (DE)**
- **Dr. Wirth, Christian 30175 Hannover (DE)**

(74) Representative: **Aumovio Corporation Continental Automotive Technologies GbH Putzbrunner Straße 69 81739 München (DE)**

(54) **APPARATUS, OBJECT DETECTOR, DATA, DATA CARRIER, COMPUTER PROGRAM, AND METHOD FOR ACTIVE LEARNING FOR AN OBJECT DETECTOR**

(57) Embodiments of the present disclosure relate to an apparatus, an object detector, data, a data carrier, a computer program, and a method for active learning for an object detector. The method comprises obtaining an uncertainty of a prediction of the object detector for one or more samples of a reference data set for testing a trained object detector. Further, the method comprises obtaining, for the samples, an occurrence score indicative of an occurrence rate of one or more object classes in a sample. The method also comprises determining a weighted uncertainty for the samples based on the uncertainty and the occurrence score for selecting, based on the weighted uncertainty, samples from the reference data set for active learning.

FIG 1

**Description**

Embodiments of the present disclosure relate to an apparatus, an object detector, data, a data carrier, a computer program, and a method for active learning for an object detector. In particular, embodiments of the present disclosure relate to a concept for selecting samples from a reference/test data set for active learning.

Active learning (AL) is applied widely in various fields of technology and science, e.g., for labeling (training) data. Labeling data typically requires a significant investment of time and money, and it is prone to errors due to its manual nature. One of the established methods to reduce labeling efforts is Active learning. Given the substantial data demand for training in state-of the-art object detectors, AL proves particularly advantageous in this context. However, real-world datasets naturally exhibit class imbalances stemming from the unequal frequencies of different classes in reality. Relying only on uncertainty for sample selection could exacerbate this imbalance and potentially harm performance by prioritizing problematic samples regardless of their class.

Hence, there may be a demand for an improved concept for active learning.

This demand may be satisfied by embodiments of the present disclosure.

Embodiments of the present disclosure use an occurrence-based approach to tackle the imbalance of object classes in active learning.

Embodiments of the present disclosure provide a method for active learning for an object detector. The method comprises obtaining an uncertainty of a prediction of the object detector for one or more samples of a reference data set for testing a trained object detector. Further, the method comprises obtaining, for the samples, an occurrence score indicative of an occurrence rate of one or more object classes in a sample. The method also comprises determining a weighted uncertainty for the samples based on the uncertainty and the occurrence score for selecting, based on the weighted uncertainty, samples from the reference data set for active learning.

In this way, the weighted uncertainty also considers a class occurrence rate and, thus, a negative impact of a class imbalance may be at least mitigated or ideally fully compensated.

Some embodiments of the proposed method further comprise selecting (based on the weighted uncertainty) samples from the reference data set for active learning.

For example, selecting the samples comprises prioritizing samples indicative of a higher occurrence score of one or more object classes, wherein the occurrence score may be inversely proportional/correlated to the occurrence rate. In other words, samples including object classes occurring less frequently may be weighted more strongly than samples including object classes occurring more frequently and vice versa. Accordingly, the weighted uncertainty of samples including object classes occurring less frequently may be higher than the weighted uncertainty of samples including object classes occurring more frequently and vice versa. So, samples including object classes occurring less frequently may be prioritized over the samples including object classes occurring more frequently. In other words, they may be preferred when selecting samples for active learning.

In doing so, the training of the object detector may involve more images including minority object classes. This may lead to a more diverse training and, thus, to an improved object detector.

In practice, the uncertainty may be calibrated. For this, e.g., isotonic regression over multiple object classes may be applied, as lait out in more detail later.

The method may further comprise obtaining a similarity of the samples and selecting, based on the similarity, samples for training the object detector. In doing so, a more diverse spectrum of samples may be selected for active learning and, thus, the informativeness of samples may be increased or a more efficient training.

In practice, selecting the samples may comprise pruning a predefined amount of samples having a similarity which is higher than a predefined threshold for the similarity. In doing so, the amount of samples for active learning may be limited to a predefined number for an efficient training. In practice, the predefined amount can be set such that the amount of selected samples can be still handled in a desired active learning strategy.

For example, the samples comprise a first and a second sample, and the first or the second sample is selected if their similarity is higher than the threshold.

In some embodiments, obtaining the similarity comprises determining, on a per sample basis, a perceptual hash value for the samples and determining the similarity based on a deviation of the perceptual hash values.

The deviation may be indicative of a Hamming distance.

Further embodiments provide a computer program comprising instructions which, when the computer program is executed by a computer, cause the computer to carry out an embodiment of the proposed method.

Other embodiments provide a computer-readable data carrier having stored thereon the proposed computer program.

Still further embodiments provide an object detector obtainable by an embodiment of the proposed method.

Other embodiments correspond to data obtainable by an embodiment of the proposed method.

Further embodiments provide an apparatus comprising one or more interfaces for communication and a data processing circuit configured to execute an embodiment of the proposed method.

Brief description of the drawings

Fig. 1 shows a flow chart schematically illustrating an embodiment of a method for active learning for an object detector;

Fig. 2 exemplarily illustrates the proposed similarity-based approach for selecting active learning strategies/training data sets; and

Fig. 3 shows a block diagram schematically illustrating an embodiment of an apparatus according to the proposed approach.

As outlined above, previous approaches either retest existing AL methods on common datasets and settings or create specialized test benches for specific use cases, but these approaches lack generalizability and are costly. The best AL approach remains unclear. Additionally, while efforts have been made to accelerate active learning, AL iterations remain expensive.

The present disclosure provides a solution addressing such shortcomings of active learning. Further details and aspects are now described below with reference to the appended drawings.

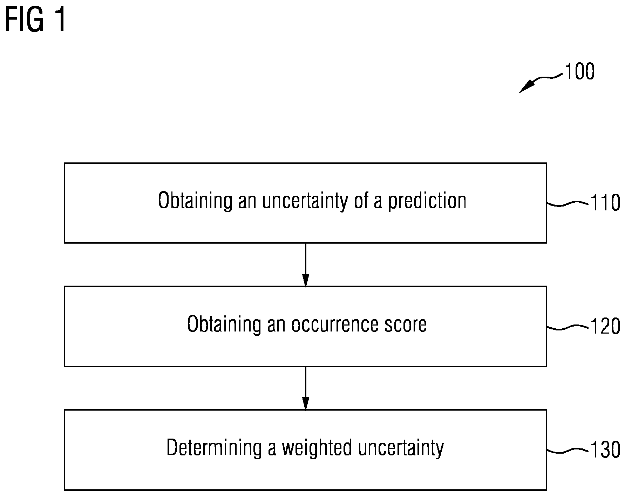

Fig. 1 shows a flow chart schematically illustrating an embodiment of a method 100 for active learning for an object detector.

As can be seen from the flow chart, method 100 comprises obtaining 110 an uncertainty of a prediction of the object detector for one or more samples of a reference data set for testing a trained object detector.

In active learning, uncertainty in predictions is often obtained by evaluating how confident a model is about its predictions. So, the uncertainty can be seen as a measure indicating how confident the object detector is about its prediction for the one or more samples of the reference data. A skilled person having benefit from the present disclosure will appreciate, that different techniques may be used for that. Techniques like uncertainty sampling involve selecting instances where the model is least confident. This can be measured using methods such as entropy of the predicted class probabilities, margin sampling, where the difference between the top two predicted probabilities is calculated, or by using Bayesian approaches like Monte Carlo Dropout, which estimates uncertainty by introducing randomness in the model and making multiple predictions on the same data. These uncertainties guide the selection of samples that the model should learn from, focusing on those it finds most difficult to classify.

Further, method 100 comprises obtaining 120, for the samples, an occurrence score indicative of an occurrence rate of one or more object classes in a sample. Accordingly, samples including object classes that occur more frequently may have a higher occurrence score then samples including less frequently occurring object classes. In automotive applications, e.g., the object class "vehicle" may occur more often than the object class "shopping cart". Accordingly, samples including one or more vehicles may have a higher occurrence score and samples including a shopping cart.

Method 100 further comprises determining 130 a weighted uncertainty for the samples based on the uncertainty and the occurrence score for selecting, based on the weighted uncertainty, samples from the reference data set for active learning. The skilled person will appreciate, that different metrics (considering the uncertainty and the occurrence score) may be used for this.

In practice, the object detector is trained based on a labelled training data set comprising images paired with annotations. For object detectors, the training data set may comprise synthetic and/or real image data including one or more images together with labels for different objects. The image data may particularly contain images of application-specific objects or objects of interest, labeled with their corresponding categories (e.g., "cat," "car") and precise locations, often defined by bounding boxes. For automotive applications, the image data, e.g., includes images of traffic environments including (different) roads, vehicles, infrastructure objects, and/or the like.

Bounding boxes may be represented by coordinates that specify positions of their corners or of a center point together with width and height. The dataset is usually divided into training, validation, and test sets. For example, in some data sets, images are annotated with object categories and bounding boxes, enabling the model/object detector to learn to detect objects across various scenes. In other data sets, images are labeled with objects and their locations.

The training data set is used to teach the object detector by adjusting its parameters based on sample images and corresponding labels. As well, the training data set may comprise a validation data set. The validation dataset may be a smaller, separate subset used during training to fine-tune the object detector, helping to prevent overfitting by evaluating performance on unseen data. For example, it guides decisions like hyperparameter tuning.

After training the object detector, a reference data set (also referred to herein as "test data set"), unseen during training, may be used to objectively assess the object detector's final performance. Preferably, the reference data set represents a use case of the object detector, for automotive applications, e.g., a traffic environment of a vehicle using the object detector.

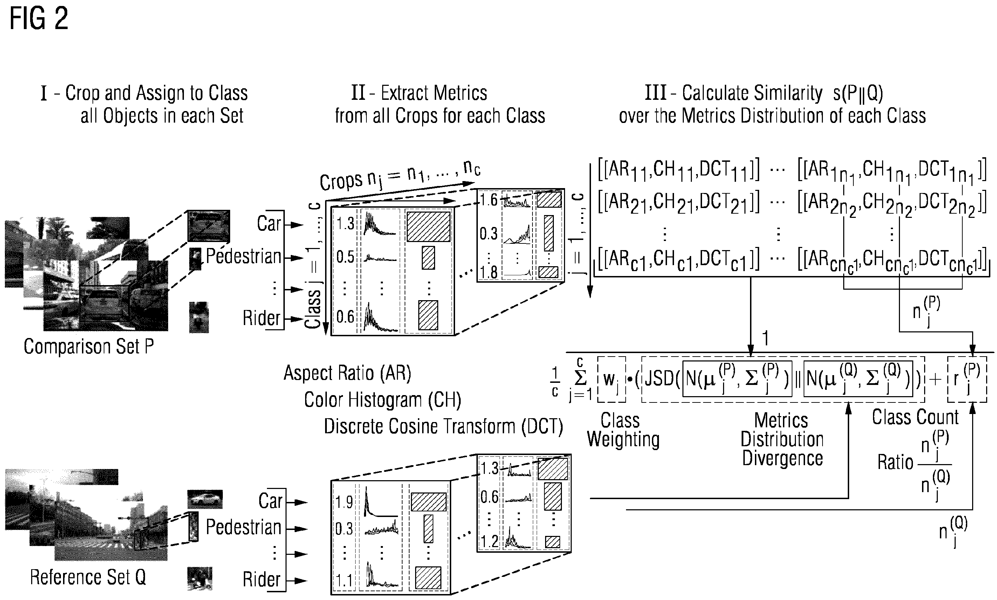

In some applications, a similarity-based approach may be applied to select training data, as laid out in more detail below with reference to Fig. 2.

Similarity-based Active Learning

As mentioned before, active learning techniques may be based on the finding that the performance of an AL training set and the reliability of an evaluation set both rely on their similarity to a data pool to which the object detector is applied, e.g., for labelling.

Fig. 2 exemplarily illustrates an embodiment of such similarity-based approach.

Pool-based active learning may follow an interactive setting on a pre-defined labeling budget $b \in \mathbb{N}_{>0}$ with also a pre-defined number of iterations $n \in \mathbb{N}_{>0}$ with $n \leq b$. Given a pool $D_{pool}$ with a size $n_{D_{pool}} \geq b$, a labeled subset at iteration $i$ for $i = 1 \ldots n$ is denoted as $X_l^i \subseteq D_{pool}$ with the corresponding labels $Y_l^i$ and unlabeled subset at iteration $i$ as $X_u^i \subseteq D_{pool}$. With a pre-defined number of samples at iteration 0 and an initial model, each following iteration comprises predicting on $X_u^i$, selecting the $b/n$ most informative samples for the model from $X_u^i$, labeling them by an Oracle, and adding them to $(X_l^i, Y_l^i)$, which results in $(X_l^{i+1}, Y_l^{i+1})$ as new training set at iteration $i + 1$. The validation and test sets denoted by $(X_{val}, Y_{val})$ and $(X_{test}, T_{test})$, respectively, are selected and labeled from $D_{pool}$ before any iteration and remain fixed.

Correlation between similarity and performance

One can identify a subset $\lfloor \frac{b}{n} \rfloor$ of $X_u^i \subseteq D_{pool}$ at every iteration $i$ that maximizes the similarity between $X_l^{i+1}$ and $D_{pool}$, that is, $\max \left( s(x_l^{i+1} || D_{pool}) \right)$. In some implementations, the similarity is based on the multivariate Jensen-Shannon divergence (JSD), more specifically based on the inverse thereof, with its calculation process illustrated in Fig. 2. Calculating the similarity $s$ may require labels, as it may be computed per-class. So, the similarity may be indicative of a class-specific similarity. The similarity $s$ between the training set $X_l^i$ ("comparison set $P$") at iteration $i$ and $D_{pool}$ ("reference set $Q$") can be inferred by the similarity between $X_l^i$ and the validation set $X_{val}$ as an alternative reference set $Q$ which is already labeled. As a result, the performance of an active learning method on $X_{val}$, typically measured via the mean average precision (mAP), positively correlates with the similarity of the selected set by that method $s(X_l^i || X_{val})$. This holds under the assumption that $X_{val}$ it is representative of $D_{pool}$ which may be the case in some evaluation strategies where $X_{val}$ may serve as the evaluation set for active learning. Hence, this also emphasizes the significance of the selection of the validation set.

Correlation between similarity and evaluation reliability

The similarity-based approach suggests measuring the reliability of an evaluation of active learning methods on $X_{val}$ via the Kendall's tau rank correlation coefficient $\tau$ between a ranking of the methods on $X_{val}$ and another evaluation set such as $X_{test}$. Alternatively, other arbitrary correlations may be used instead of the Kendall's tau rank correlation. Since performance and similarity are positively correlated to each other, higher correlation and thus similar ranks of active learning methods on two different labels evaluation sets, one of which may be $X_{val}$, is indicative of higher generalization on $D_{pool}$ and, therefore, high reliability of the evaluation set $X_{val}$. In case, the ranking of the active learning methods on $X_{val}$, proves inconsistent and other sets such as $X_{test}$, hence indicating a potential unreliability of $X_{val}$, it is suggested that a more reliable validation set may be obtained by identifying one or more suitable subsets $X_{val,subset} \subseteq X_{val}$ with $s(X_{val} || X_{test}) < s$ $(X_{val,subset} || X_{test})$. Let there be $z$ subsets denoted as $X_{val,subset}^1, \ldots, X_{val,subset}^z$, ordered according to their similarity to $X_{test}$ (measured by $s(X_{val,subset}^l || X_{test})$, $l = 1, \ldots, z$). The subsets $z$ may be determined manually based on a size of

$X_{val}$ and available computational resources. Optionally, the subsets may be determined automatically base and similarity. In practice, the subsets may be selected based on a threshold $\delta_S$ for the similarity such that only subsets having a similarity higher than a threshold are selected. Such threshold-based selection may be particularly applied if the highest similarities are close to each other (i.e., closer than a predefined threshold) relative to a median similarity $\tilde{s}$ across all subsets. In embodiments, the threshold for the similarity may be configured dynamically such that less subsets are selected if the highest similarities (e.g., $s_z$ and $s_{z-1}$) deviate more from each other and vice versa. This adaptive approach may improve the identification of subsets with notably high similarity to $X_{test}$ true subsampling. The threshold may be shifted by a manually defined constant $C_{\delta_1}$ If the difference of the top two similarities exceeds a bound relative to $\tilde{s}$ over the $z$ subsets controlled by $C_{\delta_2}$. So, $\delta_S$ may be defined as:

$$\delta_S = \begin{cases} C_{\delta_1} \cdot \tilde{s} \text{ if } s_z - s_{z-1} > C_{\delta_2} \cdot \tilde{s} \\ \text{otherwise } \tilde{s} \end{cases}$$

Once the evaluation subsets are filtered via the threshold, a robust performance indicator the 75th percentile $Q3$ (mAP) on the filtered subsets is selected, providing a reliable indication of where the mAP of that active learning method lies in 75% of cases, hence avoiding outlier performance on one side.

Quantifying similarity

Real-world datasets often have redundant information within and across multiple images in a batch (i). Object detectors are typically assessed using the mAP, which averages the detection accuracy per object class (ii). Some implementations therefore suggest measuring the similarity based on object crops for each class. This approach enables prioritizing performance-relevant features over background information, while also reducing computation time by working with lower resolution. To assess the similarity between two or more sets of images, it is proposed to first extract the crops of each object class within these sets. Then, the multivariate JSD is calculated over distributions of chosen metrics (parameters or features) extracted from the crops. The metrics may reflect properties of the objects in a spatial domain and/or a frequency domain. Accordingly, the similarity may be indicative of a similarity of the crops in a spatial domain and/or a frequency domain. The properties, for example, comprise the aspect ratio (AR) (spatial domain), which quantifies the size information, the mean of the 2D discrete cosine transform (DCT) coefficients scaled by an orthogonal transformation, capturing object-specific features, and the mean value of the flattened 3D color histogram (CH) (frequency domain), depicting the distribution of pixel intensities. In summary, the objects of each class are represented by information such as color, texture, and shape.

The multivariate JSD is calculated as follows. Assume two multivariate normal distributions $P$ and $Q$ with means $\mu^{(P)}$, $\mu^{(Q)}$ and covariances $\Sigma^{(P)}$ and $\Sigma^{(Q)}$ denoted $\mathcal{N}(\mu^{(P)}, \Sigma^{(P)})$ and $\mathcal{N}(\mu^{(Q)}, \Sigma^{(Q)})$, respectively. Then, the JSD between $P$ and $Q$ is defined by $\text{JSD}(P||Q) = \frac{1}{2}(\text{KL}[P||M] + \text{KL}[Q||M])$, where $M$ is the average distribution $M = \frac{1}{2}(P + Q)$ and KL[P‖Q] is the Kullback-Leibler (KL) divergence of $P$ from $Q$. It is noted that alternatively other examples of distributions, divergences, uncertainty measures may be used instead of the JSD, KL, normal distribution, etc.

To calculate the similarity, it is proposed to assign the extracted object crops from the two sets of images $P$ and $Q$ to their respective object classes., AR, DTC, and CH are calculated for the crops, resulting in per-class distribution for each metric. A joint multivariate normal distribution over the three dimensional vector (AR, DTC, CH)$^T$ for each class $j$ with $j = 1, ..., c$ is assumed, which is denoted as $\mathcal{N}(\mu_j^{(P)}, \Sigma_j^{(P)})$ and $\mathcal{N}(\mu_j^{(Q)}, \Sigma_j^{(Q)})$ for $P$ and $Q$, respectively. To allow the simultaneous comparison of multiple active learning methods to each other, and therefore multiple training sets, it is proposed to calculate the similarity (score) between $k$ sets $P_m$ and $Q$ for $m = 1, ..., k$ and $k \geq 1$ as:

$$s(P_m||Q) = \left( \frac{1}{c} \sum_{j=1}^{c} w_j (\text{JSD}(\widehat{P}_m||\widehat{Q}) + r_j^{(P_m)}) \right)^{-1}$$

with $r_j^{(P_m)}$ being the sigmoid smoothed ratio of class count $n_j$ for a class j. For smoothing, it is proposed to use the first-degree Taylor polynomial $T_1(x) = \frac{1}{2} + \frac{1}{4}x$ as a linear approximation of the sigmoid function around the point $x = 0$. This approximation retains sensitivity to changes in the ratios while preserving the well-known smoothing properties of the sigmoid, which may be beneficial for ensuring numerical stability and avoiding extreme values. Meanwhile, $\beta^{(Pm)}$ addresses significant differences in the detection counts among the k sets for the ratio between the detection count $n_{\text{det}}^{(Pm)}$ of each set $P_m$ and the 25$^{\text{th}}$ percentile (Q1) of all $n_{\text{det}}$ across the k sets, denoted $Q_{1_{m=1}^{k}}(n_{\text{det}}^{(Pm)})$. This may be the case when $X_{val}$ it is one of the $k$ sets being compared to $X_{test}$ alongside its subsets $X_{val,subset}$.

$$r_j^{(Pm)} = \frac{1}{4} \cdot \beta^{(Pm)} \cdot \frac{n_j^{(Pm)}}{n_j^{(Q)}} + \frac{1}{2}, \qquad \beta^{(Pm)} = \max\left(1, \frac{n_{\text{det}}^{(Pm)}}{Q_{1_{m=1}^{k}}(n_{\text{det}}^{(Pm)})}\right)$$

The class weights $w_j$ represent the average class proportion across k comparison sets relative to the reference set $Q$. This may ensure that classes with higher detection counts on average carry more weight in the final metric for each set. However, class weighting may only benefit in the case of strong class imbalance. Therefore, in some embodiments, it is only applied if the coefficient of variation $\text{CV}_w = \frac{\sigma_w}{\mu_w}$ exceeds a predefined threshold $C_{\text{CV}_w}$ Based on the class distribution, with $\mathbf{w} = (w_1, w_2, ..., w_c)^T$, the mean $\mu_w$, and the standard deviation $\sigma_{\mathbf{w}}$. If class weighting is applied, classes with a small weight $w_j < Q1(\mathbf{w})$ may be filtered out from the comparison due to their small contribution to the similarity.

$$w_j \begin{cases} 1 \text{ if } \text{CV}_w \leq C_{\text{CV}_w} \\ \frac{1}{k}\sum_{m=1}^{k} \frac{n_j^{(Pm)}}{n_{\text{det}}^{(Pm)}} \text{ otherwise} \end{cases}$$

Data pruning for diversity

A skilled person having benefit from the present disclosure will understand that the proposed approach works more reliably for diverse data sets, e.g., If the training data set and the reference data set include (mainly or only) dissimilar images, e.g., images of different traffic scenes. Accordingly, similar images and a data sets may be identified and only one of the images similar to each other may be kept for the comparison of the data sets.

Active learning scoring strategies

As discussed above, it is proposed to select multiple uncertainty-based active learning strategies (e.g., different training data sets) and investigate their performance and correlation based on the similarity.

Uncertainty estimation

For the comparison of active learning strategies, it is proposed to estimate epistemic classification ($\sigma_{ep,cls}$) and localization ($\sigma_{ep,loc}$) uncertainties. For this, it is proposed to implement a 2D spatial Monte Carlo (MC) dropout with a dropout rate of 0.05 and 10 MC samples based on past performance. To estimate the aleatoric uncertainty ($\sigma_{al}$), one may use loss attenuation (LA) in a localization had only, as it already covers the aleatoric uncertainty for object. It is further proposed to extract and apply soft-max on predicted classification budgets to calculate and entropy ($\sigma_{ent}$) as $\sigma_{ent} = -\sum_{l=1}^{c} p_l \log_2 p_l$ over confidences $p_l$ of the c classes. One can use isotonic regression per-class to calibrate $\sigma_{cls}$ and per-class and per-coordinate for $\sigma_{loc}$, and denote them with the subscript "cal". $\sigma_{loc}$ is also a normalized via $\frac{\sigma_{loc}}{\text{width or height}}$ depending if it corresponds to a y- or x-coordinate. The uncertainties for object are $\sigma_{loc} = \frac{1}{4}\sum_{i=0}^{4} \sigma_{loc,i}$ and $\sigma_{cls} = \frac{1}{c}\sum_{i=1}^{c}(c_{cls,i})$ for $i \in [1, c]$ with c classes.

## Training variants

Different strategies are compared based on the uncertainties and the one having the maximum uncertainty is selected. The uncertainties include $\sigma_{ep} = \sigma_{ep,cls} + \sigma_{ep,loc}$, $\sigma_{ep} - \sigma_{al}$, $\sigma_{ent} + \sigma_{al}$, and a calibrated version of each uncertainty $\sigma$. Summations are achieved after first min-max scaling each term. Embodiments of the proposed approach use top-k of a maximum per-image for aggregation as max outperforms mean and sum, and top-k outperforms bottom-k. Additionally, the n-bins formulation is tested by dividing the scores space into equal-sized bins and quarrying from the top (n-1) bins (exploration) and last been (exploitation). We select $n = 5$.

## Class balancing

Given the significant class in balance present in real-world data sets, embodiments suggest weighting an active learning scoring function for the proposed similarity-based assessment of different training data sets based on a class count (e.g., depending on an occurrence frequency of object classes in training data set). It aims to enhance the representation of underrepresented classes by considering proportion of each class in the predictions made on $X_u^i$ at iteration $i$. For that, it is proposed to construct a c-dimensional vector $w_{cb,j} = \frac{1}{N} \sum^N \frac{n_{det}}{n_j}$ representing the weight for each class $j = 1, ..., c$, with the total number of images $N$ and the number of classes c. A class distribution score per image/sample can be calculated for the example of $\sigma_{ent,cb} = \sigma_{ent} \cdot \frac{1}{c_{im}} \sum_{j=1}^{c_{im}} w_{cb,j}$ or $\sigma_{ent,cb} = \sigma_{ent} + \frac{1}{c_{im}} \sum_{j=1}^{c_{im}} w_{cb,j}$ for $c_{im}$ occurring classes and that respective image/sample.

Then, samples providing the highest $\sigma_{ent,cb}$ may be selected from the reference data set for active learning. In other words, samples indicative of a higher occurrence score of one or more object classes may be prioritized over samples having a lower occurrence score (provided that they have the same prediction uncertainty).

## Pool pruning

The proposed approach may further comprise obtaining a similarity of the samples and selecting, based on the similarity, samples for training the object detector.

For this, it is also proposed to prune redundant data samples/images from the pool $D_{pool}$ before active learning. For that, embodiments suggest leveraging the proposed concept of similarity and its relationship with the informativeness of a sample. Given that at the start lower labels are available, one can use perceptual hash values of the images/samples as proxy. To identify and prune redundant images, it is proposed to construct a Hamming distance square matrix D between all the images. One can then manually define a threshold $C_H$, relative to the maximum distance in the pool max (D), below which two images are considered similar. For each group of images that are clustered together due to their low inter-image distances, one can randomly select what image to represent the group and prune the rest. Therefore, by eliminating a subset of the images from $D_{pool}$, only dissimilar and divers images are retained in order to reduce computational costs. The threshold can be adjusted to reflect the available computing resources.

In this way, an object class is disregarded if a respective occurrence rate is less than a predefined threshold.

In doing so, a predefined number of samples having a similarity which is higher than a predefined threshold for the similarity may be pruned. For this, the threshold may be set such that the number of samples correspond to a maximum budget of costs for labelling. In this way, the costs may be kept at or below a certain level.

In summary, the present disclosure suggests an occurrence-based approach that mitigates the negative effect of class imbalances on object detectors during active learning.

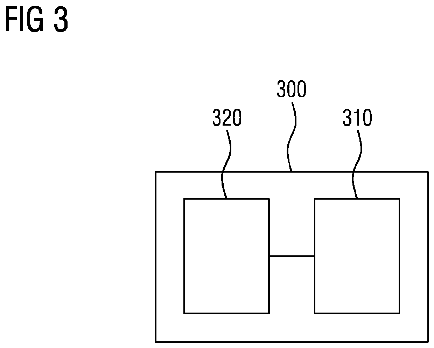

As the skilled person will appreciate, the proposed approach may be also implemented in an apparatus, as outlined in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of an ADS (autonomous/assisted driving system).

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1.  A method (100) for active learning for an object detector, wherein the method (100) comprises:

    obtaining (110) an uncertainty of a prediction of the object detector for one or more samples of a reference data set for testing a trained object detector;
    obtaining (120), for the samples, an occurrence score indicative of an occurrence rate of one or more object classes in a sample; and
    determining (130) a weighted uncertainty for the samples based on the uncertainty and the occurrence score for selecting, based on the weighted uncertainty, samples from the reference data set for active learning.

2.  The method (100) of claim 1, wherein the method (100) further comprises selecting samples from the reference data set for active learning.

3.  The method (100) of claim 2, wherein selecting the samples comprises prioritizing samples indicative of a higher occurrence score of one or more object classes.

4.  The method (100) of any one of the preceding claims, wherein the uncertainty is calibrated.

5.  The method (100) of any one of the preceding claims, wherein the method (100) further comprises obtaining a similarity of the samples and selecting, based on the similarity, samples for training the object detector.

6.  The method (100) of claim 5, wherein selecting the samples comprises pruning a predefined amount of samples having a similarity which is higher than a predefined threshold for the similarity.

7.  The method (100) of claim 6, wherein the samples comprise a first and a second sample, and wherein the first or the second sample is selected if their similarity is higher than the threshold.

8. The method (100) of any one of the claims 5 to 7, wherein obtaining the similarity comprises determining, on a per sample basis, a perceptual hash value for the samples and determining the similarity based on a deviation of the perceptual hash values.

9. The method (100) of claim 8, wherein the deviation is indicative of a hamming distance.

10. A computer program comprising instructions which, when the computer program is executed by a computer, cause the computer to carry out the method (100) of any one of the claims 1 to 9.

11. A computer-readable data carrier having stored thereon the computer program of claim 8.

12. An object detector obtainable by a method (100) according to any one of the claims 1 to 9.

13. Data obtainable by a method (100) according to any one of the claims 1 to 9.

14. An apparatus (300) comprising:

> one or more interfaces (310) for communication; and
> a data processing circuit (320) configured to execute the method (100) of any one of the claims 1 to 9.

FIG 1

~100

Obtaining an uncertainty of a prediction ~110

Obtaining an occurrence score ~120

Determining a weighted uncertainty ~130

EP 4 610 889 A1

# FIG 2

I - Crop and Assign to Class
all Objects in each Set

II - Extract Metrics
from all Crops for each Class

III - Calculate Similarity $s(P\|Q)$
over the Metrics Distribution of each Class

Crops $n_j = n_1, \ldots, n_c$

Comparison Set P

Car
Pedestrian
Rider

Class $j = 1, \ldots, c$

1.3
0.5
0.6

1.6
0.3
1.8

$$j = 1, \ldots, c \begin{bmatrix} [[AR_{11},CH_{11},DCT_{11}]] & \cdots & [[AR_{1n_1},CH_{1n_1},DCT_{1n_1}]] \\ [[AR_{21},CH_{21},DCT_{21}]] & \cdots & [[AR_{2n_2},CH_{2n_2},DCT_{2n_2}]] \\ \vdots & \vdots & \vdots \\ [[AR_{c1},CH_{c1},DCT_{c1}]] & \cdots & [[AR_{cn_c},CH_{cn_c},DCT_{cn_c}]] \end{bmatrix}$$

$n_j^{(P)}$

Aspect Ratio (AR)
Color Histogram (CH)
Discrete Cosine Transform (DCT)

Reference Set Q

Car
Pedestrian
Rider

1.9
0.3
1.1

1.3
0.6
1.2

$$\frac{1}{c} \sum_{j=1}^{c} w_j \cdot \left( JSD\left( N(\mu_j^{(P)}, \Sigma_j^{(P)}) \| N(\mu_j^{(Q)}, \Sigma_j^{(Q)}) \right) \right) + r_j^{(P)}$$

Class
Weighting

Metrics
Distribution
Divergence

Class Count
Ratio $\dfrac{n_j^{(P)}}{n_j^{(Q)}}$

$n_j^{(Q)}$

FIG 3

Europäisches
Patentamt

European
Patent Office

Office européen
des brevets

# EUROPEAN SEARCH REPORT

Application Number

EP 24 19 8896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHMIDT SEBASTIAN ET AL: "Advanced Active Learning Strategies for Object Detection", 2020 IEEE INTELLIGENT VEHICLES SYMPOSIUM (IV), IEEE, 19 October 2020 (2020-10-19), pages 871-876, XP033873389, DOI: 10.1109/IV47402.2020.9304565 [retrieved on 2020-12-22] * the whole document * | 1-14 | INV. G06N3/091 |

-----

TECHNICAL FIELDS
SEARCHED      (IPC)

G06N

The present search report has been drawn up for all claims

| Place of search | Date of completion of the search | Examiner |
|---|---|---|
| The Hague | 18 February 2025 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)